Europäisches Patentamt

European Patent Office

Office européen des brevets

(19)

(11) Publication number: **0 206 566**
**A2**

## (12) EUROPEAN PATENT APPLICATION

(21) Application number: **86304166.1**

(22) Date of filing: **02.06.86**

(51) Int. Cl.⁴: **B60S 9/06**

(30) Priority: **12.06.85 GB 8514920**
**04.09.85 GB 8521915**

(43) Date of publication of application:
**30.12.86 Bulletin 86/52**

(84) Designated Contracting States:
**AT BE CH DE FR GB IT LI LU NL SE**

(71) Applicant: **Elkins, Gordon Charles**
**Baldham Mill**
**Seend Melksham Wiltshire(GB)**
Applicant: **Lowden, George Alan**
**138 Littlehampton Road**
**Ferring Worthing West Sussex(GB)**

(72) Inventor: **Elkins, Gordon Charles**
**Baldham Mill**
**Seend Melksham Wiltshire(GB)**

(74) Representative: **Murgitroyd, Ian G. et al**
**Murgitroyd and Company Mitchell House 333**
**Bath Street**
**Glasgow, G2 4ER Scotland(GB)**

(54) **Tool.**

(57) One embodiment of a tool for use in the raising and lowering of caravan stabilisers comprises an elongate cranked handle (70) attached to a flexible extension member (71) provided with a socket (72).

The socket (72) may be located on a bolt head which is rotated in order to raise or lower a caravan stabiliser. The length of the handle (70) and the flexible nature of the extension member (71) permit an operator to use the tool from a standing position adjacent the caravan.

EP 0 206 566 A2

Fig 11

73

70

71

72

1a

# Tool

This invention relates to a tool for use in operating caravan stabilisers.

Caravans are, for many people, a most useful form of holiday accommodation combining the comforts of a holiday apartment with the portability of a tent.

While being towed between sites a caravan is supported at the front by the towing car and by the set of wheels provided on the caravan. Once the caravan is on-site and has been unhitched from the car additional support is required to stabilise the caravan. This support is provided by four stabilisers each situated at a corner of the caravan. The stabilisers are moved from their storage position, adjacent the caravan body, to their in-use position, where they bear against the ground, by the rotation of a screw situated on the stabiliser mounting.

The screw is normally provided with a bolt head which the user must turn, by means of a socket spanner, to lower or raise the stabiliser.

Many caravan bodies overhang the stabiliser mounting making the lowering and raising of the stabilisers a difficult and awkward operation, especially for older persons who form the majority of caravan owners.

An object of the present invention is to provide a tool to facilitate the lowering and raising of caravan stabilisers.

According to the present invention there is provided a tool for use in the operation of caravan stabilisers comprising an elongate cranked handle member, an elongate extension member and a socket, the handle member and the socket being attached to opposite end portions of the extension member.

Preferably, the extension member is flexible and may be in the form of a helical spring.

Preferably also, the handle member may apply a couple, and thus a moment, to the handle member.

Further according to the present invention, there is provided a tool for use in the operation of caravan stabilisers comprising an elongate extension member, for attachment to the socket of a wheel brace or the like, and a socket provided at an end portion of the extension member.

Preferably, the extension member is flexible.

Still further according to the present invention there is provided a tool for use in the operation of caravan stabilisers comprising an elongate body member, a socket, drive means for the socket, and operating means for said drive means, the socket and the operating means being located at respective opposite end portions of the body member and being connected by the drive means which are located within the body member.

Preferably, the socket is mounted on the end of a shaft which extends from the end of the body member.

Preferably also, the operating means are in the form of a rotatable crank.

The drive means may be in the form of a cable, a rod or a chain.

The body member may be rigid or may be flexible or jointed to allow the socket to be maneouvred into inaccessible locations.

Preferably also, a support handle is provided on the body member.

Preferably also, a magnet is provided in the socket to help retain the socket in the operating position on the head of an adjusting bolt provided on the caravan stabilisers. Yet still further according to the present invention there is provided a tool for use in the operation of caravan stabilisers comprising a body member, a socket, an electric motor for driving said socket, the socket being mounted on a shaft extending from an end portion of the body member, switch means for the electric motor being provided at an opposite end portion of the body member.

Preferably, the body member accommodates a number of batteries which act as the power source for the electric motor.

Embodiments of the present invention will now be described by way of example with reference to the accompanying drawings, in which:

Fig. 1 is a side view of a first embodiment of a tool according to the present invention;

Fig. 2 is a front view of the tool of Fig. 1;

Fig. 3 is a part cut away side view of a second embodiment of a tool according to the present invention;

Fig. 4 is a side view of a third embodiment of the present invention;

Fig. 5 is a part side view of a modification of the tool of Fig. 4;

Fig. 6 is a side view of a fourth embodiment of the present invention;

Fig. 7 is a side view of an embodiment of an electrically driven tool according to the present invention;

Fig. 8 is a front view of the tool of Fig. 7;

Fig. 9 is a part cut-away side view of yet another embodiment of a tool according to the present invention; and

Fig. 10 is a sectional side view of the socket of the tool of Fig. 9.

Fig. 11 is a side view of a still another embodiment of a tool according to the present invention;

Fig. 12 is a segmented sectional view of the hand grip assembly of the tool of Fig. 11; and

Fig. 13 is a segmented sectional view of the flexible extension portion of the tool of Fig. 11.

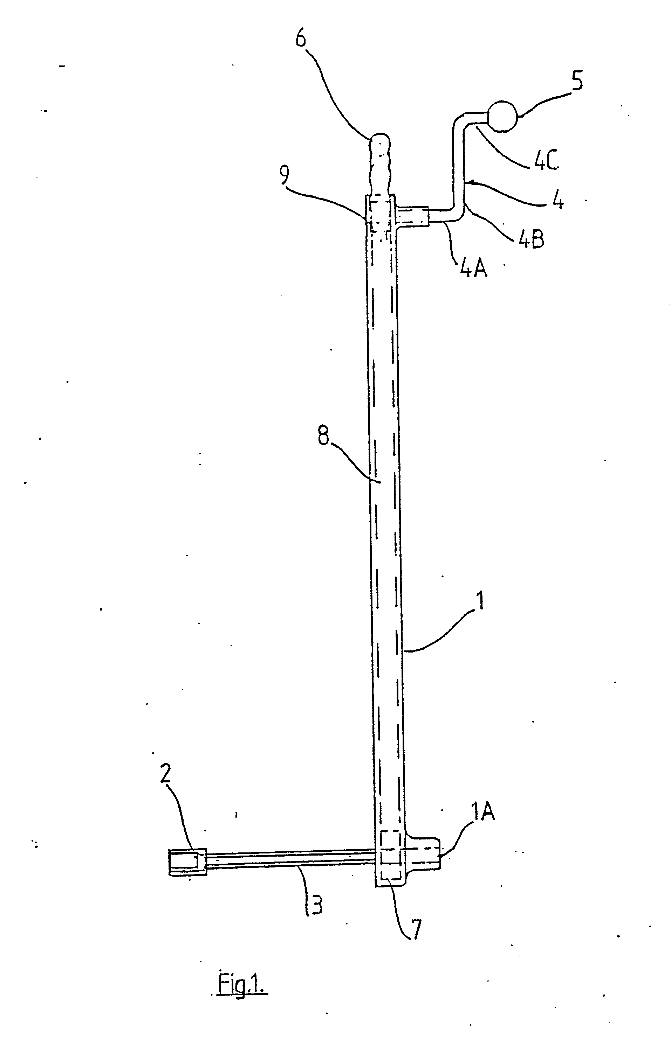

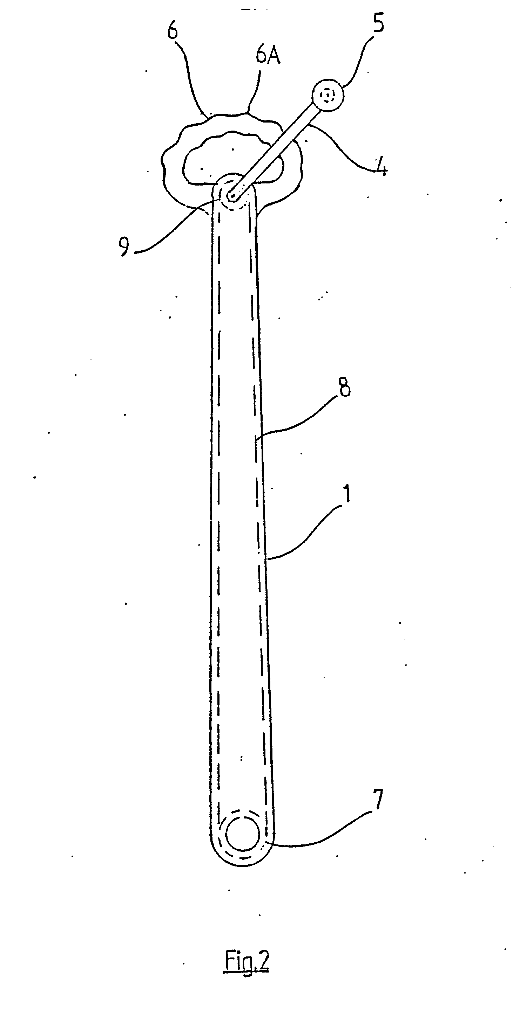

Referring to Figs. 1 and 2 of the drawings, a first embodiment of a tool for use in operating caravan stabilisers comprises an elongate body member 1, a socket 2 fixed on a circular shaft 3 located at one end of the body member 1, a driving crank 4 located at the other end of the body member 1, and drive means in the form of a chain 8 located within the body member 1.

The circular shaft 3 is rotatably mounted in and extends normal to the body member 1 and a bushing IA extends from the opposite side of the body member 1 to help provide a secure mounting for the shaft 3. A gear 7 is provided on the portion of the shaft 3 which is located within the body member 1.

A small magnet (not shown) is provided in the socket 2 to help retain the socket 2 on the head of the adjusting bolt of a caravan stabiliser when the tool is in use. The chain 8 passes over the gear 7 and extends along the length of the body member 1 to the opposite end of the member 1 where the chain passes over a second gear 9.

The second gear 9 is located on the portion of the driving crank 4 which lies within the body member 1 and is smaller than the gear 7 by a ratio of 1:1-5. The crank· 4 initially extends from the body member in the opposite direction to the shaft 3 and is provided with a radial portion 4B and an end portion 4C which is parallel to the portion 4A located in the body member 1. A small spherical knob 5 is provided on the end portion 4C of the crank 4 to give the user a better grip of the crank 4.

A support handle 6 extends from the end of the body 1 and is provided with a ribbed portion 6A to provide a secure grip for the user. In use, the user locates the socket 2 on the head of the adjusting bolt of a caravan stabiliser unit (not shown) and may exert force on the bushing IA to help hold the socket 3 in position, however, in most situations the magnet in the socket 2 provides sufficient attractive force to hold the socket 2 in place. The user then grips the handle 6 with one hand and rotates the driving crank 4 with the other, thus rotating the socket 3 and adjusting the stabiliser.

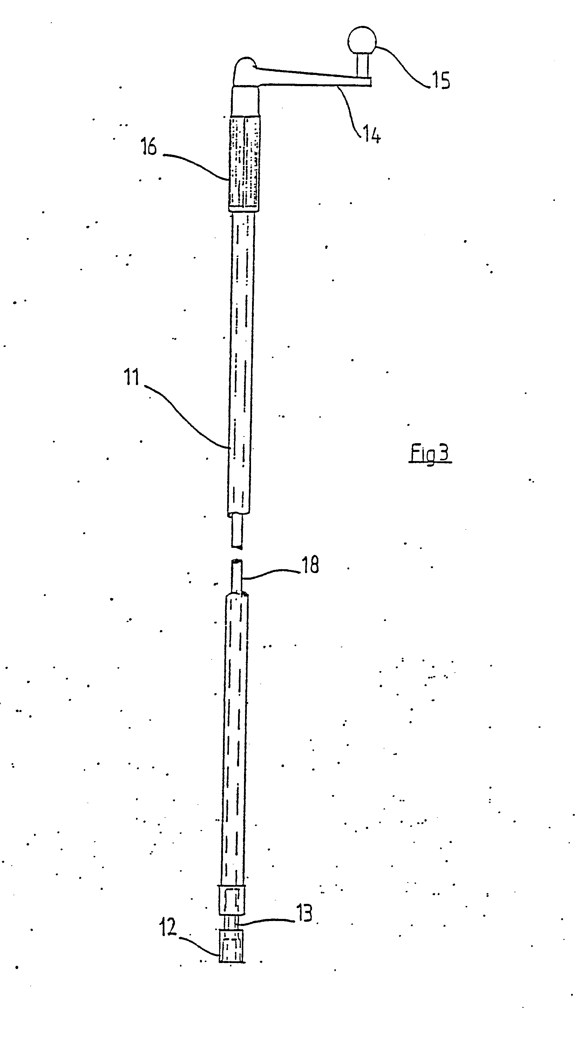

Referring now to Fig. 3 of the drawings, a second embodiment of a tool for use in operating caravan stabilisers comprises a flexible elongate tubular body member 11, a socket 12 fixed on a short length of circular shaft 13 located at one end of the body member 11, a driving crank 14 located at the other end of the body member 11 and drive means in the form of a cable 18 located within the body member 11 the shaft 13 and the crank 14 are connected to respective opposite ends of the double wound cable 18.

The driving crank 14 extends normal from the end of the body member 11 and is provided with a spherical knob 15 on its end.

A support handle 16 is provided and is in the form of a rotatable cylindrical sleeve which is fitted over and located at the end portion of the body 11 thus permitting the user to grip the handle 16 with one hand while rotating the driving lever 14 with the other.

The flexible nature of the body member 11 and the cable 18 allow the tool to bend so that the socket can be positioned in inaccessible locations.

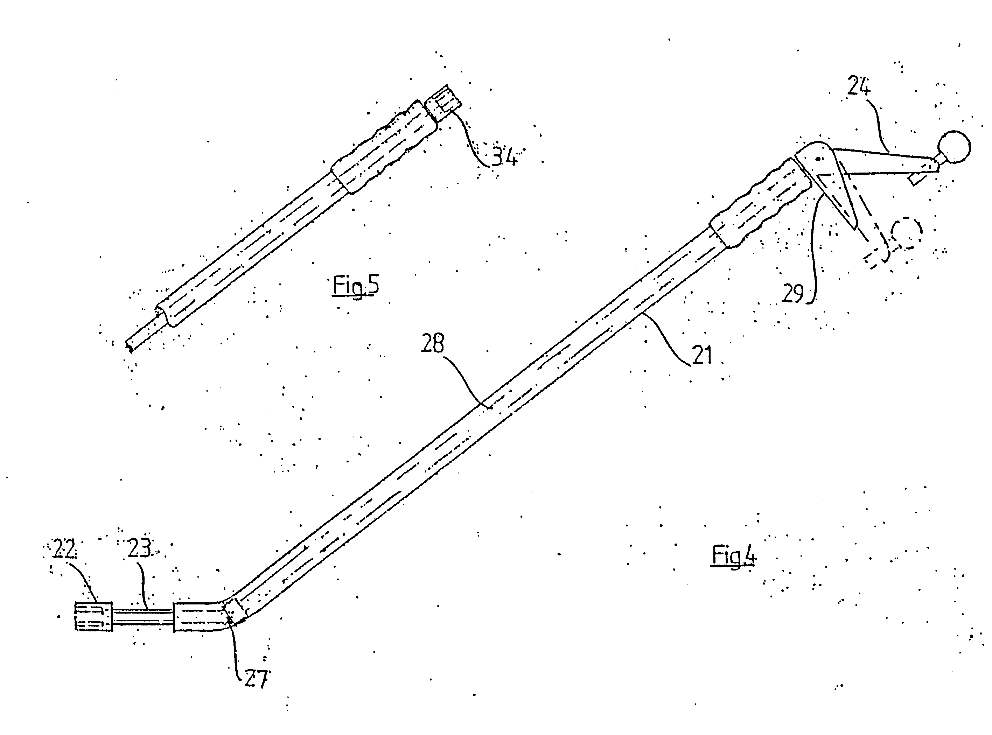

Referring now to Fig. 4 of the drawings, a third embodiment of a tool for operating caravan stabilisers comprises an elongate tubular body member 21, a socket 22 fixed on the end of a circular shaft 23 located at one end of the body member 21, a driving crank 24 located at the other end of the body member 21, and drive means in the form of a rod 28, located within the body member 21.

The rod 28 is linked to the shaft 23 by a universal joint 27 located in the end portion of the body member 21 which is cranked to facilitate use.

The driving crank 24 of this embodiment is pivotally mounted in a bracket 29 which is connected to the end of the rod 28 and may be operated at a small radius to allow the lever to be rotated quickly or at a larger radius (shown by dotted lines) to provide greater leverage.

In an alternative embodiment the rod 28 may be replaced by a double wound cable.

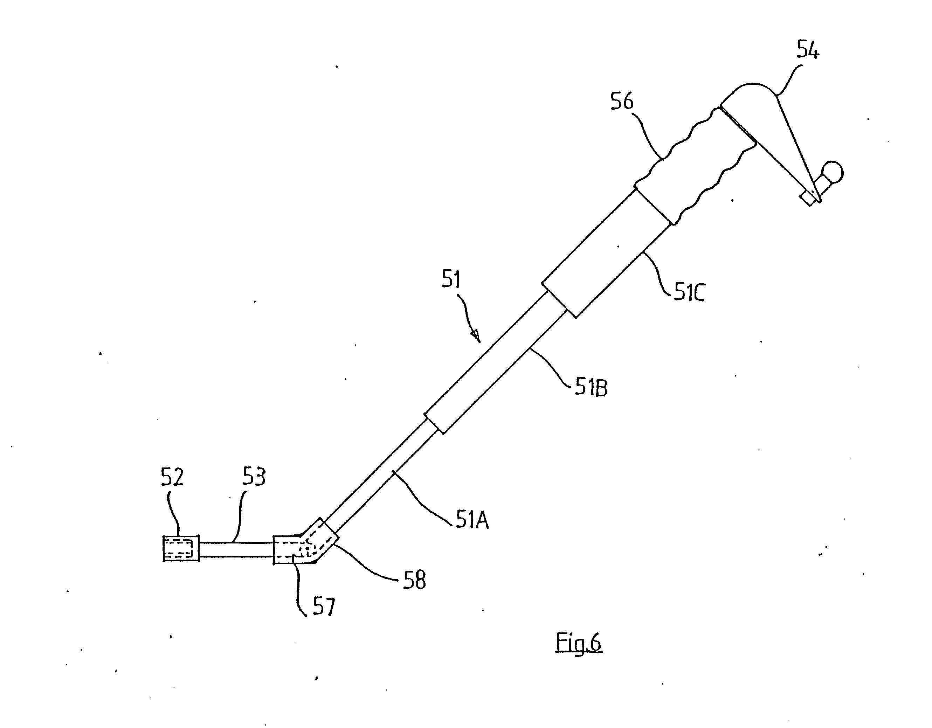

Fig. 5 of the drawings shows an adaptation of the tool of Fig. 4 where the driving crank 24 has been replaced by a female socket 34. A ratchet, an electric drill or a clip-on motor drive may be fitted into the socket 34 to operate the tool.

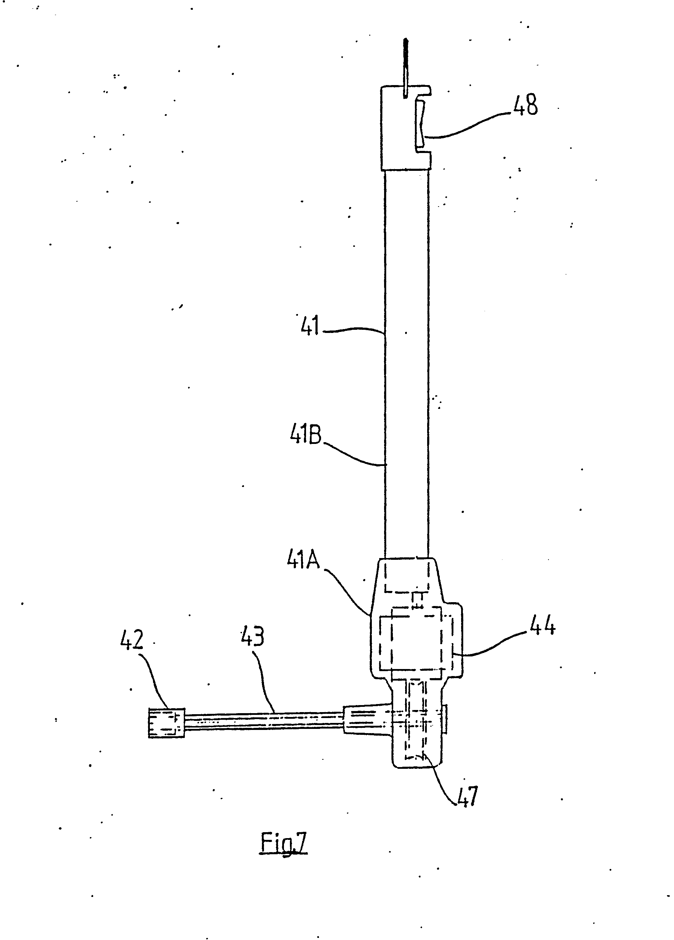

Referring now to Fig. 6 of the drawings, a fourth embodiment of a tool for use in operating caravan stabilisers comprises an elongate body member 51, a socket 52 fixed on a shaft 53 located at one end of the body member 51 and a driving crank 54 located at the other end of the body member 51.

In this embodiment the body member 51 has three sections 51A, 51B and 51C. Two sections 51A and 51B are square in cross section and may telescope into the larger section 51C which is provided with a circular outer cross section.

The smallest section 51A is connected by a universal joint 57 to the shaft 53, a cylindrical spring 58 being located around the joint 57.

A support handle 56 is provided and is in the form of a rotatable cylindrical sleeve which is fitted over and located at the end portion of the largest section 51C of the body member 51.

When not in use the body member 51 of the tool may be telescoped into the length of the largest section 51C thus saving space when the tool is being stored.

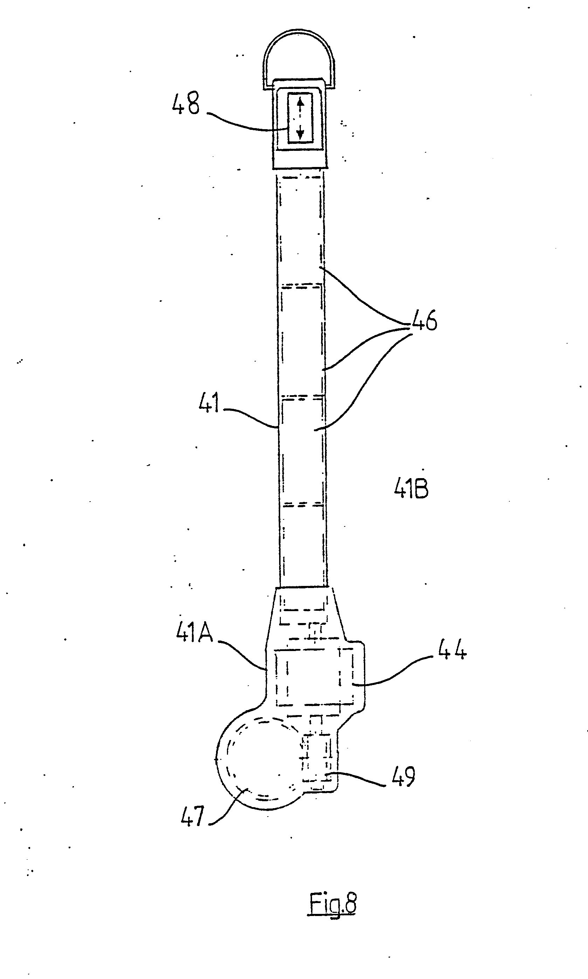

Referring now to Figs. 7 and 8 of the drawings, a further embodiment of a tool for use in operating caravan stabilisers comprises a body member 41, an electrical motor 44 located within the body member 41, a socket 42 fixed on a shaft 43 located at one end of the body member 41, a two-way operating switch 48 located at the opposite end of the body member 41, and drive means connecting the motor 44 and the shaft 43 in the form of worm gear 49 which meshes with a gear wheel 47 fixed in the shaft 43.

The worm gear 49 is driven by the electric motor 44 which is located in a lower housing portion 41A of the body member 41. The upper portion 41B of the body member 41 is hollow and accommodates a set of rechargeable batteries 46 for driving the motor 44.

In use, the user locates the socket 42 on the bolthead and operates the switch 48 to turn the electric motor and the socket 42 in the desired direction.

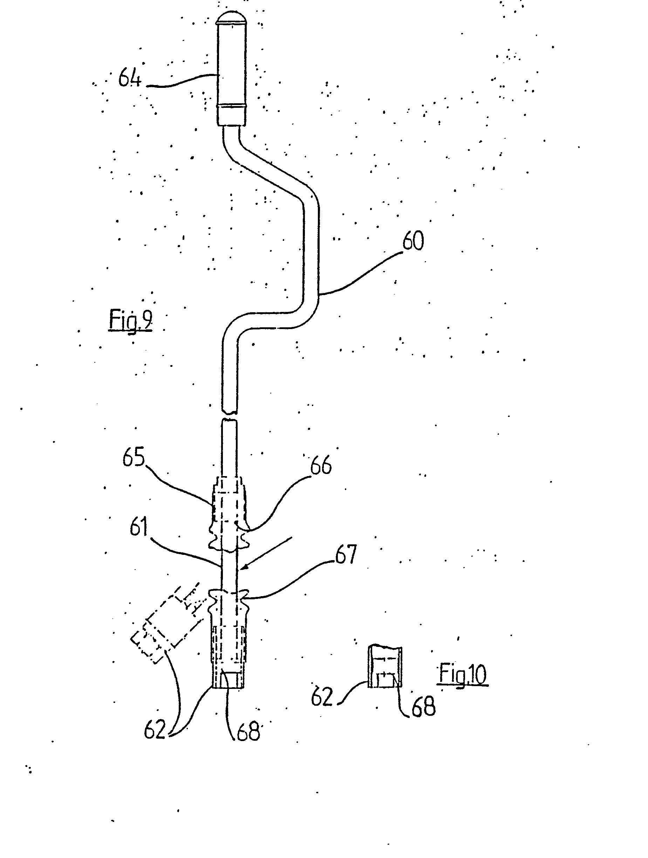

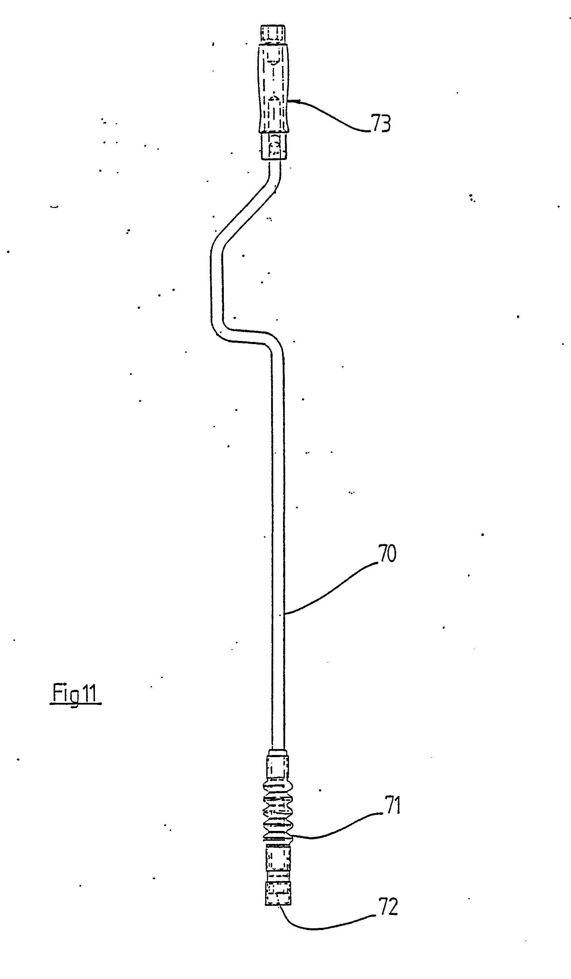

Referring now to Figs. 9 and 10 of the drawings, yet another embodiment of a tool for use in operating caravan stabilisers comprises an elongate handle member in the form of a conventional wheel brace 60 and an elongate extension member, in the form of a helical spring, 61 having a socket 62 mounted on an end portion thereof.

At one end portion of the brace 60 there is provided a rotatable handle 64 and at the opposite end of the brace 60 there is provided a socket 65.

One end portion of the extension member 66 is shaped to cooperate with the socket 65 and is held in place in the socket 65 by a resilient sleeve 67 which extends along the length of the extension member 61.

The socket 62 on the end portion of the extension member 61 is provided with a magnetic locator 68 which helps to retain the tool on the bolthead of a caravan stabiliser.

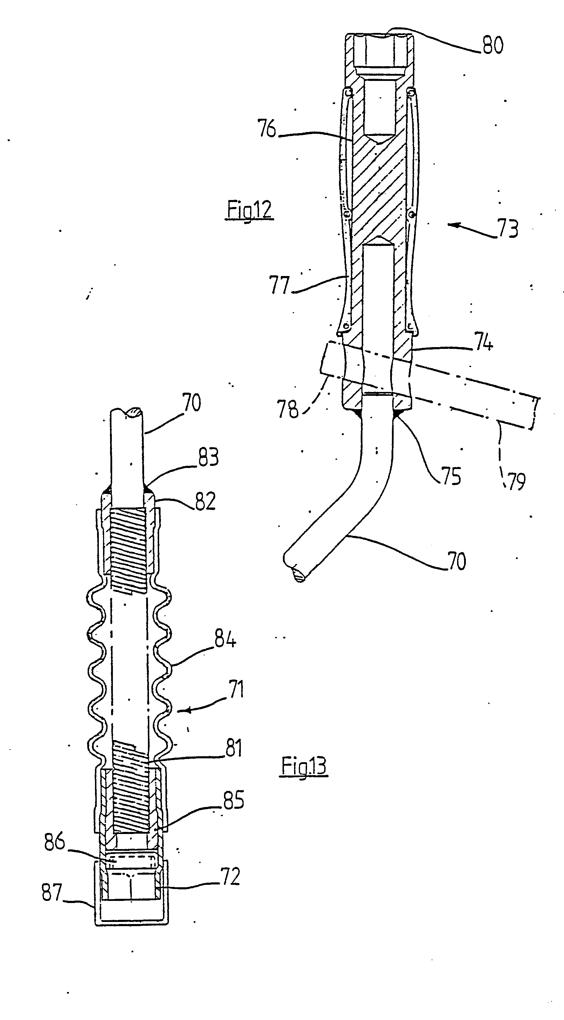

Referring now to Figs. 11, 12 and 13 of the drawings, still another embodiment of a tool for use in operating caravan stabilisers comprises an elongate cranked handle 70 and a flexible extension portion 71 having a socket 72 mounted on an end portion thereof.

At the free end of the handle 70 there is a hand grip assembly 73 having a cylindrical body portion 74, which is welded at 75 to the handle 70, and has an inset 76 for receiving a shaped hand grip 77.

A cross hole 78 is provided through the body portion 73 and the handle 70 to receive the end of a tommy bar 79. This allows an operator to apply a greater torque to the handle 70 and thus the tool may be used, for example, in place of a wheel brace.

The free end of the body portion 73 features a female socket 80 for receiving a ratchet, an electric drill bit, or a clip-on motor drive.

The flexible extension portion 71 comprises a helical spring 81 fixed at one end to a boss 82 which is welded, at 83, to the end of the handle 70, and at the other end to a second boss 85 on which the socket 72 is mounted. A flexible gaiter 84 extends between the bosses 82 and 85 to protect the spring 81.

A magnet 86 is located in the socket 72 to assist positioning of the tool and a removable end cap 87 is provided to cover the socket 72 when not in use.

Modifications and improvements may be made without departing from the scope of the invention.

**Claims**

1. Tool for use in the operation of caravan stabilisers comprising an elongate cranked handle member (70), an elongate extension member (71) and a socket (72), the handle member (70) and the socket (72) being attached to opposite end portions of the extension member (71).

2. A tool as claimed in Claim 1, wherein the extension member (71) is flexible.

3. A tool as claimed in Claims 1 or 2, wherein the extension member (71) is formed of a helical spring (81).

4. A tool as claimed in Claims 1, 2 or 3, wherein the socket (72) is provided with a magnet (84) to assist an operator in the location of the socket (72).

5. A tool as claimed in any one of the preceding Claims, wherein the handle member (70) is provided with a cross hole (78) for receiving the end portion of a lever (79).

6. Tool for use in the operation of caravan stabilisers comprising an elongate extension member (61), for attachment to the socket of a wheel brace (60) or the like, and a socket (62) provided at an end portion of the extension member (61).

7. A tool as claimed in Claim 6, wherein the extension member (61) is flexible.

8. Tool for use in the operation of caravan stabilisers comprising an elongate body member - (1), a socket (2), drive means (8) for the socket (2), and operating means (4) for said socket (2), the socket (2) and the operating means (4) being located at opposite end portions of the body member (1) and being connected by the drive means (8) which are located within the body member (1).

9. Tool for use in the operation of caravan stabilisers comprising a body member (41), a socket (42), an electric motor (44) for driving said socket (42), the socket (42) being mounted on a shaft (43) extending from an end portion of the body member (41), switch means (48) for the electric motor (44) being provided at an opposite end portion of the body member.

Fig.1.

Fig.2

Fig 3

Fig.5

Fig.4

0 206 566

Fig.6

0 206 566

Fig.7

48

46

41

41B

41A

44

49

47

Fig.8

64

60

Fig.9

65

66

61

67

62    68

62    68

Fig.10

Fig 11

80

76

Fig 12

77

73

74

78

75

79

70

70

70

83

82

84

71

81

Fig 13

85

86

72

87